# EUROPEAN PATENT SPECIFICATION

(11) **EP 3 944 948 B1**
(45) Date of publication and mention of the grant of the patent: **04.06.2025**
(21) Application number: 21185962.4
(22) Date of filing: 16.07.2021
(51) Int. Cl.: B29C 45/53, B29C 45/54, B29C 45/24

(54) **INJECTION MOLDING MACHINE**
SPRITZGIESSMASCHINE
MACHINE DE MOULAGE À INJECTION

(30) Priority: 31.07.2020 JP 2020130985
(43) Date of publication of application: 02.02.2022
(73) Proprietor: Sumitomo Heavy Industries, Ltd., Tokyo 141-6025 (JP)
(72) Inventor: TAKANOHASHI, Ryuichi, Tokyo, 141-6025 (JP)
(74) Representative: Louis Pöhlau Lohrentz

(56) References cited:
- EP-A1- 2 907 645
- EP-A1- 3 421 217
- CA-A1- 2 475 758
- US-A1- 2006 264 557

## Description

### BACKGROUND OF THE INVENTION

### Field of the Invention

The present invention relates to an injection molding machine.

### Description of Related Art

An injection unit for injecting a molten resin into a mold unit is known.

Japanese Unexamined Patent Publication No. 2015-150810 discloses an injection unit including a first cylinder, a first movable unit that moves a molding material inside the first cylinder, a second cylinder to which the molding material is supplied from the first cylinder, a second movable unit that moves the molding material inside the second cylinder, a nozzle that injects a molding material into a mold unit, and a switching unit that switches flow directions of the molding material among the first cylinder, the second cylinder, and the nozzle. United States Patent Publication No. 2006/264557 discloses an in-line compounding and molding process for making fiber reinforced polypropylene composite parts and articles that exhibit beneficial mechanical and aesthetic properties imparted by such process and compositions. European Patent Publication No. 3421217 discloses an injection device which is provided with a flow path switching block. Canadian Patent Publication No. 2475758 discloses an injection molding apparatus for use for articles made from synthetic hygroscopic synthetic resinous materials. European Patent Publication No. 2907645 discloses an injection unit for harmonizing an operation of a first movable section with an operation of a second movable section.

### SUMMARY OF THE INVENTION

Incidentally, in an injection molding machine system that supplies a molten resin as a molding material to an injection unit, an extruder can be used as a molten resin supply device. Here, the extruder continuously supplies the molten resin. Therefore, there is a possibility that the molten resin may overflow in the injection unit.

Therefore, an object of the present invention is to provide an injection molding machine capable of supplying a molten resin.

According to an aspect of an embodiment, there is provided an injection molding machine including an injection unit which includes a reservoir cylinder and an injection cylinder and to which a molten resin is supplied, a supply unit that supplies the molten resin to the reservoir cylinder and the injection cylinder, a discharge unit that discharges the molten resin supplied to the injection unit, a nozzle that injects the molten resin supplied to the injection cylinder into a mold unit, a control unit that controls the injection unit, a switching unit that switches flow directions of the molten resin among a supply/discharge switching unit, the injection cylinder, and the nozzle, and the supply/discharge switching unit that switches flow directions of the molten resin among the supply unit, the reservoir cylinder, the switching unit, and the discharge unit. The control unit has a determination unit that determines whether or not the molten resin is capable of being received in the injection cylinder, and a processing unit that controls the supply/discharge switching unit such that the flow direction of the molten resin is switched, based on a determination result of the determination unit.

According to the present invention, it is possible to provide the injection molding machine capable of supplying the molten resin.

### BRIEF DESCRIPTION OF THE DRAWINGS

FIG. 1 is a configuration diagram of an injection molding machine system according to a first embodiment.
FIG. 2 is a schematic sectional view of an injection unit according to the first embodiment.
FIG. 3 is a flowchart illustrating an operation of the injection unit according to the first embodiment.
FIG. 4 is a view illustrating a state of the injection unit according to a first embodiment in a plasticizing process.
FIG. 5 is a view illustrating a state of the injection unit to the first embodiment after the plasticizing process is completed.
FIG. 6 is a view illustrating a state of the injection unit according to the first embodiment in a filling process.
FIG. 7 is a view illustrating a state of the injection unit according to the first embodiment in a holding pressure process.
FIG. 8 is a flowchart illustrating an operation of a discharge valve in the injection unit according to the first embodiment.
FIG. 9 is a view illustrating a state of the injection unit according to the first embodiment in which the discharge valve is in a second state.
FIG. 10 is a schematic sectional view of an injection unit according to a second embodiment.
FIG. 11 is a view illustrating a state of the injection unit according to the second embodiment in a plasticizing process.
FIG. 12 is a view illustrating a state of the injection unit according to the second embodiment after the plasticizing process is completed.
FIG. 13 is a view illustrating a state of the injection unit according to the second embodiment in a filling process.
FIG. 14 is a view illustrating a state of the injection unit according to the second embodiment in a holding pressure process.
FIG. 15 is a flowchart illustrating an operation of a supply/discharge valve in the injection unit according to the second embodiment.
FIG. 16 is a view illustrating a state of the injection unit according to the second embodiment in which a discharge valve is in a second state.

### DETAILED DESCRIPTION OF THE INVENTION

Hereinafter, embodiments according to the present invention will be described with reference to the drawings. In each drawing, the same or corresponding reference numerals will be assigned to the same or corresponding configurations, and description thereof will be omitted.

### <Injection Molding Machine System S>

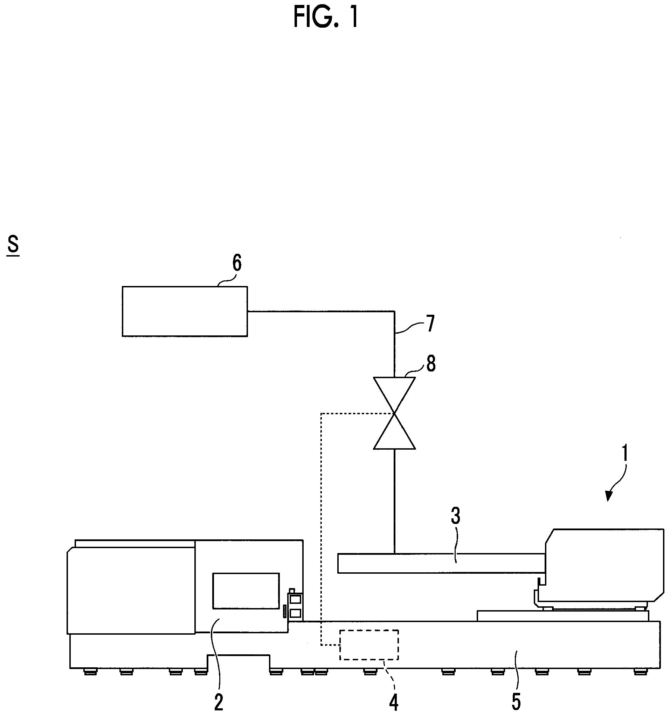

An injection molding machine system S according to a first embodiment will be described with reference to FIG. 1. FIG. 1 is a configuration diagram of the injection molding machine system S according to the first embodiment.

The injection molding machine system S includes an injection molding machine 1, a molten resin supply device 6, a molten resin supply path 7, and a control valve 8.

The injection molding machine 1 includes a mold clamping unit 2 that opens and closes a mold unit (not illustrated), an injection unit 3 that injects a molding material into a cavity space of the mold unit, an ejector unit (not illustrated) that ejects a molding product molded by the mold unit, a moving unit (not illustrated) that advances and retreats the injection unit 3 with respect to the mold unit, a control unit 4 that controls each component of the injection molding machine 1, and a frame 5 that supports each component of the injection molding machine 1.

The mold clamping unit 2 performs a mold closing process, a pressurizing process, a mold clamping process, a depressurizing process, and a mold opening process under the control of the control unit 4. In the mold closing process, the control unit 4 controls the mold clamping unit 2 so that a movable mold touches a stationary mold. In the pressurizing process, the control unit 4 controls the mold clamping unit 2 to generate a mold clamping force. In the mold clamping process, the control unit 4 controls the mold clamping unit 2 to maintain the mold clamping force generated in the pressurizing process. In the depressurizing process, the control unit 4 controls the mold clamping unit 2 to reduce the mold clamping force. In the mold opening process, the control unit 4 controls the mold clamping unit 2 so that the movable mold is separated from the stationary mold.

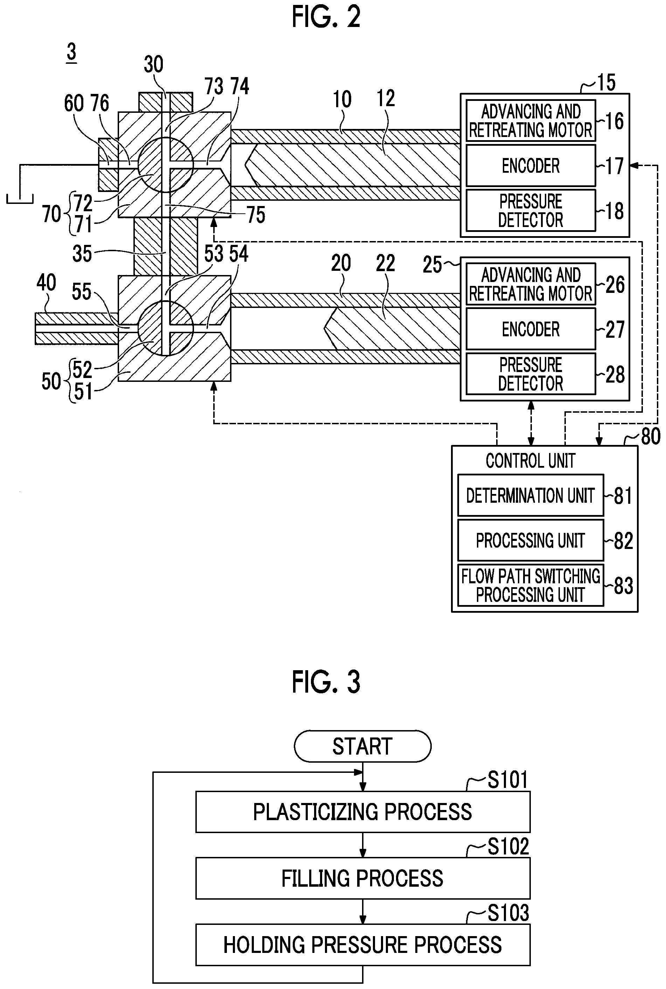

The injection unit 3 performs a plasticizing process, a filling process, and a holding pressure process under the control of the control unit 4. The filling process and the holding pressure process may be collectively referred to as an injection process. In the plasticizing process, the control unit 4 controls the injection unit 3 so that a predetermined amount of a molten resin is accumulated in front of a second plunger 22 (refer to FIG. 2 (to be described later)). In the filling process, the control unit 4 controls the injection unit 3 to fill the cavity space inside the mold unit with the molten resin accumulated in front of the second plunger 22. In the holding pressure process, the control unit 4 controls the injection unit 3 so that the second plunger 22 is pushed forward, a pressure (holding pressure) of the molding material is held at a setting pressure in a front end portion of the second plunger 22, and the molten resin remaining inside an injection cylinder 20 (refer to FIG. 2 (to be described later)) is pushed toward the mold unit. In the injection molding machine 1, a cooling process starts after the holding pressure process. In the cooling process, the molding material inside the cavity space is solidified. In order to shorten a molding cycle time, the plasticizing process may be performed during the cooling process.

The ejector unit (not illustrated) performs an ejection process under the control of the control unit 4. In the ejection process, the control unit 4 controls the ejector unit so that an ejector rod (not illustrated) is advanced from a standby position to an ejection position to eject the molding product. Thereafter, the ejector rod is retreated to an original standby position.

The moving unit (not illustrated) advances and retreats the injection unit 3 with respect to the mold unit. The injection unit 3 is advanced toward the mold unit so that a nozzle 40 of the injection unit 3 is pressed against the stationary mold of the mold unit. The injection unit 3 is retreated so that the nozzle 40 of the injection unit 3 is separated from the stationary mold of the mold unit.

The control unit 4 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of the plasticizing process to the start of the subsequent plasticizing process will be referred to as a "shot" or a "molding cycle" . In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. Completion of the depressurizing process coincides with start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve (not illustrated) for opening and closing a flow path of the nozzle 40 (refer to FIG. 2 (to be described later)) of the injection unit 3 is provided, the mold opening process may start during the plasticizing process. The reason is as follows. Even when the mold opening process starts during the plasticizing process, when the on-off valve (not illustrated) closes the flow path of the nozzle 40 of the injection unit 3, the molding material does not leak from the nozzle 40 of the injection unit 3.

One molding cycle may include a process other than the plasticizing process, the mold closing process, the pressurizing process, the mold clamping process, the filling process, the holding pressure process, the cooling process, the depressurizing process, the mold opening process, and the ejection process.

The molten resin supply device 6 is a device that supplies the molten resin (molding material). For example, the molten resin supply device 6 may be an extruder that melts and extrudes a solid molding material (for example, pellets).

The molten resin supply path 7 is a flow path that supplies the molten resin from the molten resin supply device 6 to the injection unit 3. For example, the molten resin supply path 7 may include a pipe through which the molten resin flows, an insulation material for covering the pipe, and a heater for warming the molten resin flowing inside the pipe.

The control valve 8 is provided in the molten resin supply path 7, and controls supply of the molten resin to the injection unit 3. For example, the control valve 8 may be an on-off valve. The control valve 8 is controlled by the control unit 4 (control unit 80 (to be described later)) of the injection molding machine 1.

The injection molding machine system S according to the first embodiment is illustrated by using a configuration in which one injection molding machine 1 is connected to the molten resin supply path 7. However, the present invention is not limited thereto, and a configuration may be adopted so that a plurality of the injection molding machines 1 are connected to the molten resin supply path 7. In addition, the injection molding machine system S according to the first embodiment is illustrated by using a configuration in which one molten resin supply device 6 is connected to the molten resin supply path 7. However, the present invention is not limited thereto, and a configuration may be adopted so that a plurality of the molten resin supply devices 6 are connected to the molten resin supply path 7.

### <Injection unit 3 according to First Embodiment>

Next, the injection unit 3 of the injection molding machine 1 according to the first embodiment will be further described with reference to FIG. 2. FIG. 2 is a schematic sectional view of the injection unit 3 according to the first embodiment. FIG. 2 is a sectional view perpendicular to a rotation center line of a valve body 52.

The injection unit 3 includes a reservoir cylinder (first cylinder) 10, a first plunger (first movable unit) 12, a first plunger drive unit (first drive unit) 15, an injection cylinder (second cylinder) 20, a second plunger (second movable unit) 22, a second plunger drive unit (second drive unit) 25, a molten resin supply unit (supply unit) 30, a connecting portion 35, the nozzle 40, a direction switching valve (switching unit) 50, a discharge unit 60, a discharge valve (supply/discharge switching unit) 70, and a control unit (control unit) 80(4).

A liquid molding material (molten resin) is supplied into the reservoir cylinder 10 from the molten resin supply unit 30. A heating source such as a heater is provided on an outer periphery of the reservoir cylinder 10.

The first plunger 12 is disposed inside the reservoir cylinder 10 to move the molding material inside the reservoir cylinder 10. The first plunger 12 is disposed inside the reservoir cylinder 10 to be freely advanced and retreated.

The first plunger drive unit 15 operates the first plunger 12. The first plunger drive unit 15 has an advancing and retreating motor 16, an encoder 17, and a pressure detector 18.

The advancing and retreating motor 16 advances and retreats the first plunger 12. A motion conversion mechanism for converting a rotary motion of the advancing and retreating motor 16 into a linear motion of the first plunger 12 is provided between the first plunger 12 and the advancing and retreating motor 16. For example, the motion conversion mechanism is configured to include a ball screw.

The encoder 17 detects the rotation of the advancing and retreating motor 16, and transmits a signal indicating a detection result thereof to the control unit 80. The control unit 80 calculates a position and a movement speed of the first plunger 12, based on a detection value of the encoder 17. The detection result of the encoder 17 is used in controlling or monitoring the position of the first plunger 12 or the movement speed of the first plunger 12.

The pressure detector 18 is provided in a force transmission channel between the advancing and retreating motor 16 and the first plunger 12, detects a force transmitted between the advancing and retreating motor 16 and the first plunger 12, and transmits a signal indicating a detection result thereof to the control unit 80. The detected force is converted into a pressure of the first plunger 12 by the control unit 80. The detection result of the pressure detector 18 is used in controlling or monitoring the pressure received from the molding material by the first plunger 12, a back pressure with respect to the first plunger 12, or the pressure acting on the molding material from the first plunger 12.

The molding material is supplied into the injection cylinder 20 from the molten resin supply unit 30 and the reservoir cylinder 10. A heating source such as a heater is provided on the outer periphery of the injection cylinder 20.

The second plunger 22 is disposed inside the injection cylinder 20 to moves the molding material inside the injection cylinder 20. The second plunger 22 is disposed inside the injection cylinder 20 to be freely advanced and retreated.

The second plunger drive unit 25 operates the second plunger 22. The second plunger drive unit 25 has an advancing and retreating motor 26.

The advancing and retreating motor 26 s advances and retreats the second plunger 22. A motion conversion mechanism for converting a rotary motion of the advancing and retreating motor 26 into a linear motion of the second plunger 22 is provided between the second plunger 22 and the advancing and retreating motor 26. For example, the motion conversion mechanism is configured to include a ball screw.

The encoder 27 detects the rotation of the advancing and retreating motor 26, and transmits a signal indicating a detection result thereof to the control unit 80. The control unit 80 calculates the position and movement speed of the second plunger 22, based on a detection value of the encoder 27. The detection result of the encoder 27 is used for controlling or monitoring the position of the second plunger 22 or the movement speed of the second plunger 22.

The pressure detector 28 is provided in a force transmission channel between the advancing and retreating motor 26 and the second plunger 22, detects a force transmitted between the advancing and retreating motor 26 and the second plunger 22, and transmits a signal indicating the detection result to the control unit 80. The detected force is converted into the pressure of the second plunger 22 by the control unit 80. The detection result of the pressure detector 28 is used in controlling or monitoring the pressure received from the molding material by the second plunger 22, a back pressure with respect to the second plunger 22, or the pressure acting on the molding material from the second plunger 22.

The molten resin supply unit 30 is connected to the molten resin supply path 7 (refer to FIG. 1), and the molten resin is continuously supplied from the molten resin supply device 6.

The connecting portion 35 connects the molten resin supply unit 30, the reservoir cylinder 10, and the direction switching valve 50 so that the molten resin can flow therethrough.

The nozzle 40 injects the molding material supplied from the direction switching valve 50 into the mold unit. The liquid molding material filled inside the mold unit is solidified, and the molding product is molded.

The direction switching valve 50 switches flow directions of the molding material among the connecting portion 35 (reservoir cylinder 10, molten resin supply unit 30), the injection cylinder 20, and the nozzle 40. The direction switching valve 50 has a valve casing 51, a valve body 52, and a valve body drive unit (not illustrated).

The valve casing 51 has a supply side connection port 53, an injection cylinder connection port 54, and a nozzle connection port 55. The supply side connection port 53 communicates with the inside of the molten resin supply unit 30 and the reservoir cylinder 10. The injection cylinder connection port 54 communicates with the inside of the injection cylinder 20. The nozzle connection port 55 communicates with the inside of the nozzle 40.

For example, the injection cylinder connection port 54 and the nozzle connection port 55 are provided on sides opposite to each other across a rotation center line of the valve body 52. On the other hand, for example, the supply side connection port 53 is provided at a position substantially equidistant along the outer periphery of the valve body 52 from both the injection cylinder connection port 54 and the nozzle connection port 55. That is, the injection cylinder connection port 54, the supply side connection port 53, and the nozzle connection port 55 are disposed at a 90° pitch in this order in a predetermined direction (counterclockwise in FIG. 2) around the rotation center line of the valve body 52.

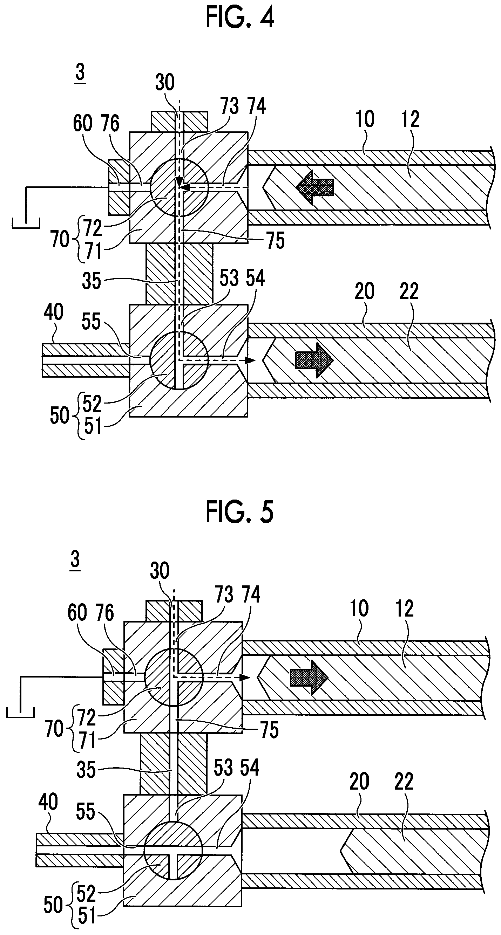

The valve body 52 is rotated inside the valve casing 51 to switch between a first state (refer to FIG. 4 (to be described later)) and a second state (refer to FIGS. 5 to 7). In the first state, the valve body 52 causes the supply side connection port 53 and the injection cylinder connection port 54 to communicate with each other, and closes the nozzle connection port 55. On the other hand, in the second state, the valve body 52 causes the injection cylinder connection port 54 and the nozzle connection port 55 to communicate with each other, and closes the supply side connection port 53. In this manner, in the first state, the molten resin is suppliable to the injection cylinder 20 from the molten resin supply unit 30 and reservoir cylinder 10. In the second state, the molten resin is suppliable to the nozzle 40 from the injection cylinder 20.

A state of the valve body 52 is not limited to the first state and the second state. For example, the valve body 52 may be in a state of simultaneously closing the supply side connection port 53, the injection cylinder connection port 54, and the nozzle connection port 55. In addition, the valve body 52 may be in a state where the supply side connection port 53 and the nozzle connection port 55 communicate with each other and the injection cylinder connection port 54 is closed.

The valve body drive unit operates the valve body 52. Specifically, the valve body drive unit switches between the first state and the second state by rotating the valve body 52 inside the valve casing 51.

The discharge unit 60 discharges the molten resin outward of the injection unit 3.

The discharge valve 70 is a valve for opening and closing the discharge unit 60. In an example illustrated in FIG. 2, the discharge valve 70 is configured to serve as a direction switching valve. The discharge valve 70 switches flow directions of the molding material among the molten resin supply unit 30, the reservoir cylinder 10, the connecting portion 35 (direction switching valve 50), and the discharge unit 60. The discharge valve 70 has a valve casing 71, a valve body 72, and a valve body drive unit (not illustrated).

The valve casing 71 has connection ports 73 to 76. The connection port 73 communicates with the inside of the molten resin supply unit 30. The connection port 74 communicates with the inside of the reservoir cylinder 10. The connection port 75 communicates with the inside of the connecting portion 35. The connection port 76 communicates with the inside of the discharge unit 60. In the connection ports 73 to 76, the connection port 73, the connection port 74, the connection port 75, and the connection port 76 are disposed at a 90° pitch in this order in a predetermined direction (clockwise in FIG. 2) around the rotation center line of the valve body 72. In addition, the connection ports 73 to 75 serve as supply paths for supplying the molten resin from the molten resin supply unit 30 to the cylinder (reservoir cylinder 10 and/or the injection cylinder 20). The connection port 76 serves as a discharge path for discharging the molten resin from the molten resin supply unit 30 to the discharge unit 60.

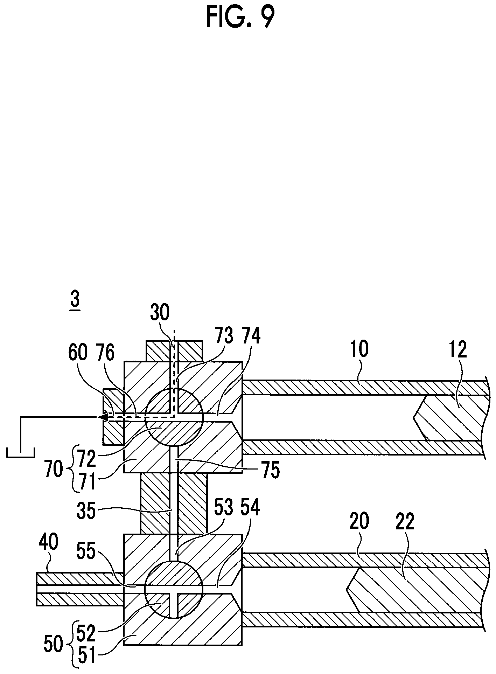

The valve body 72 is rotated inside the valve casing 71 to switch between the first state (refer to FIGS. 4 to 7 (to be described later)) and the second state (refer to FIG. 9 (to be described later)). In the first state, the valve body 72 causes the connection ports 73 to 75 to communicate with each other, and closes the connection port 76. On the other hand, in the second state, the valve body 72 causes the connection ports 73, 74, and 76 to communicate with each other, and closes the connection port 75.

A state of the valve body 72 is not limited to the first state and the second state. For example, the valve body 72 may be in a state where the connection ports 73, 75, and 76 communicate with each other and the connection port 74 is closed. In addition, the valve body 72 may be in a state where the connection ports 74 to 76 communicate with each other and the connection port 73 is closed.

The valve body drive unit operates the valve body 72. Specifically, the valve body drive unit switches between the first state and the second state by rotating the valve body 72 inside the valve casing 71.

The control unit 80 controls the first plunger drive unit 15, the second plunger drive unit 25, the direction switching valve 50, and the discharge valve 70. The control unit 80 may be configured to serve as a portion of the control unit 4 that controls each component of the injection molding machine 1. In addition, the control unit 80 may be provided separately from the control unit 4.

The control unit 80 has a determination unit 81, a processing unit 82, and a flow path switching processing unit 83. The determination unit 81 determines whether or not the molten resin is suppliable to the injection unit 3. That is, the determination unit 81 determines whether or not the molten resin can be received in the cylinder (reservoir cylinder 10 and/or injection cylinder 20) of the injection unit 3. The processing unit 82 processes the supply of the molten resin on the determination result of the determination unit 81. The flow path switching processing unit 83 controls the first plunger drive unit 15, the second plunger drive unit 25, and the direction switching valve 50 to control a flow of the molten resin.

### <Operation of Injection Unit 3 according to First Embodiment>

Next, an operation of the injection unit 3 according to the first embodiment will be described with reference to FIGS. 3 to 7. FIG. 3 is a flowchart illustrating the operation of the injection unit 3 according to the first embodiment. In describing the operation illustrated in a flow of FIG. 3, the valve body 72 of the discharge valve 70 is in the first state. In addition, in FIGS. 4 to 7 (and FIG. 9 (to be described later)), the flow of the molten resin is indicated by a broken line arrow, and moving directions of the first plunger 12 and the second plunger 22 are indicated by shaded arrows. In the flowchart illustrated in FIG. 3, an example will be described in which the determination unit 81 determines that the molten resin is suppliable to the injection unit 3.

FIG. 4 is a view illustrating a state of the injection unit 3 according to the first embodiment in the plasticizing process. In Step S101, the flow path switching processing unit 83 of the control unit 80 performs the plasticizing process. The flow path switching processing unit 83 of the control unit 80 controls a valve body drive unit of the direction switching valve 50 so that the valve body 52 of the direction switching valve 50 is brought into the first state. The molten resin supplied from the molten resin supply unit 30 is accumulated in front of the second plunger 22 inside the injection cylinder 20 via the molten resin supply unit 30, the discharge valve 70, the connecting portion 35, and the direction switching valve 50. In addition, the flow path switching processing unit 83 of the control unit 80 drives the advancing and retreating motor 16 to advance the first plunger 12. The molten resin accumulated in front of the first plunger 12 inside the reservoir cylinder 10 is accumulated in front of the second plunger 22 inside the injection cylinder 20 via the discharge valve 70, the connecting portion 35, and the direction switching valve 50.

The molten resin is accumulated in front of the second plunger 22 inside the injection cylinder 20. In this manner, the second plunger 22 inside the injection cylinder 20 is retreated. In addition, the flow path switching processing unit 83 of the control unit 80 detects a position of the second plunger 22, based on a detection value of the encoder 27. Here, in order to suppress sudden retreat of the second plunger 22, the flow path switching processing unit 83 of the control unit 80 may drive the advancing and retreating motor 26, based on a detection value of the pressure detector 28, and a set back pressure may be applied to the second plunger 22.

FIG. 5 is a view illustrating a state of the injection unit 3 according to the first embodiment after the plasticizing process is completed. When the second plunger 22 is retreated to a predetermined position and a predetermined amount of the molten resin is accumulated in front of the second plunger 22, the flow path switching processing unit 83 of the control unit 80 stops driving the advancing and retreating motor 16, and stops driving the advancing and retreating motor 26. In addition, the flow path switching processing unit 83 of the control unit 80 controls the valve body drive unit of the direction switching valve 50 so that the valve body 52 of the direction switching valve 50 is brought into the second state. The molten resin supplied from the molten resin supply unit 30 is accumulated in front of the first plunger 12 inside the reservoir cylinder 10 via the molten resin supply unit 30 and the discharge valve 70. The molten resin is accumulated in front of the first plunger 12 inside the reservoir cylinder 10. In this manner, the first plunger 12 inside the reservoir cylinder 10 is retreated. In addition, the flow path switching processing unit 83 of the control unit 80 detects a position of the first plunger 12, based on a detection value of the encoder 17. Here, in order to suppress sudden retreat of the first plunger 12, the flow path switching processing unit 83 of the control unit 80 may drive the advancing and retreating motor 16, based on a detection value of the pressure detector 18, and a set back pressure may be applied to the first plunger 12. A process in which the valve body 52 of the direction switching valve 50 is brought into the second state and the molten resin supplied from the molten resin supply unit 30 is accumulated in front of the first plunger 12 inside the reservoir cylinder 10 will be referred to as a reservoir plunger plasticizing process.

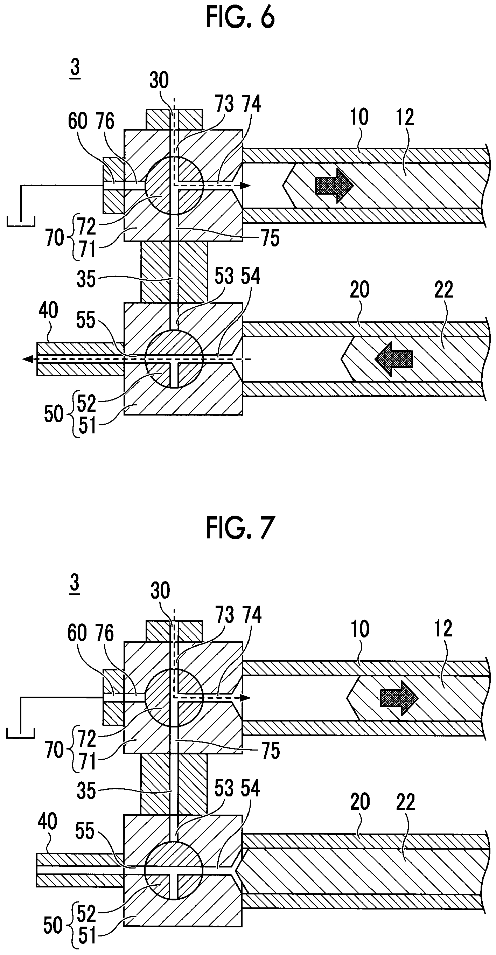

FIG. 6 is a view illustrating a state of the injection unit 3 according to the first embodiment in the filling process. In Step S102, the flow path switching processing unit 83 of the control unit 80 performs the filling process. The flow path switching processing unit 83 of the control unit 80 drives the advancing and retreating motor 26 to advance the second plunger 22 to a predetermined position. In addition, the flow path switching processing unit 83 of the control unit 80 detects a position of the second plunger 22, based on a detection value of the encoder 27. The cavity space inside the mold unit is filled with the molten resin accumulated in front of the second plunger 22 inside the injection cylinder 20 via the direction switching valve 50 and the nozzle 40. In addition, in the filling process, the molten resin supplied from the molten resin supply unit 30 is accumulated in front of the first plunger 12 inside the reservoir cylinder 10 via the molten resin supply unit 30 and the discharge valve 70 (reservoir plunger plasticizing process) .

FIG. 7 is a view illustrating a state of the injection unit 3 according to the first embodiment in the holding pressure process. In Step S103, the flow path switching processing unit 83 of the control unit 80 performs the holding pressure process. In addition, the flow path switching processing unit 83 of the control unit 80 controls the advancing and retreating motor 26, based on a detection value of the pressure detector 28, so that the second plunger 22 is pushed forward, a pressure (holding pressure) of the molten resin is held at a setting pressure in the front end portion of the second plunger 22, and the molten resin remaining inside the injection cylinder 20 is pushed toward the mold unit. In addition, in the holding pressure process, the molten resin supplied from the molten resin supply unit 30 is accumulated in front of the first plunger 12 inside the reservoir cylinder 10 via the molten resin supply unit 30 and the discharge valve 70 (reservoir plunger plasticizing process) . In addition, the flow path switching processing unit 83 of the control unit 80 detects a position of the first plunger 12, based on a detection value of the encoder 17.

After the holding pressure process is completed and before the molding material is supplied from the reservoir cylinder 10 to the injection cylinder 20 in the subsequent plasticizing process, the flow path switching processing unit 83 of the control unit 80 rotates the valve body 52 of the direction switching valve 50, and returns a state of the valve body 52 from the second state illustrated in FIG. 7 to the first state illustrated in FIG. 4.

The flow path switching processing unit 83 of the control unit 80 repeatedly performs the plasticizing process, the filling process, and the holding pressure process so that the injection molding machine 1 repeatedly manufactures the molding products.

In other words, the control unit 80 of the injection unit 3 according to the first embodiment repeatedly performs the reservoir plunger plasticizing process of supplying the molten resin from the molten resin supply unit 30 to the reservoir cylinder 10 and accumulating the molten resin in the reservoir cylinder 10, the plasticizing process of supplying the molten resin from the molten resin supply unit 30 and the reservoir cylinder 10 to the injection cylinder 20 and accumulating the molten resin in the injection cylinder 20, the filling process of filling the cavity space inside the mold unit with the molten resin from the injection cylinder 20, and the holding pressure process of holding the pressure of the molten resin at the setting pressure. In addition, during the injection process (filling process and holding pressure process), the reservoir plunger plasticizing process of the subsequent molding cycle is performed at the same time.

As described above, according to the injection unit 3 in the first embodiment, the injection unit 3 is used for the injection molding machine system S in which the molten resin is continuously supplied to the molten resin supply unit 30 from the molten resin supply device 6. In the reservoir plunger plasticizing process, the molten resin can be accumulated in the reservoir cylinder 10. Accordingly, the overflow of the molten resin can be prevented.

### <Operation of Discharge Valve 70>

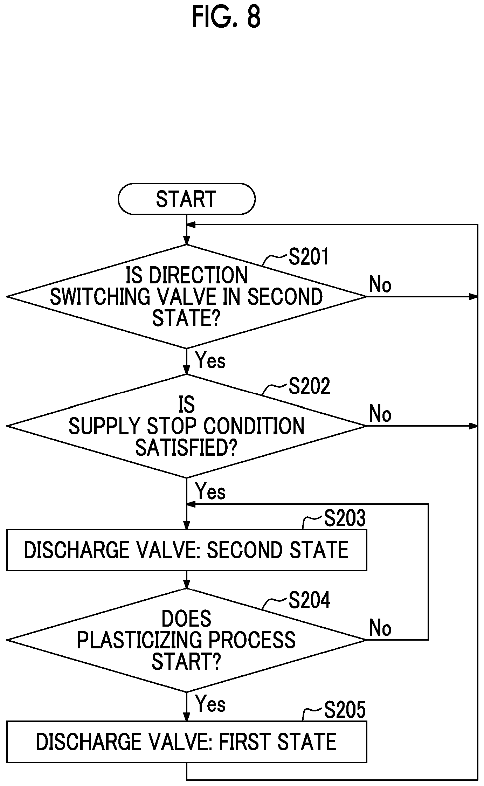

Next, an operation of the discharge valve 70 of the injection unit 3 according to the first embodiment will be described with reference to FIGS. 8 to 9. FIG. 8 is a flowchart illustrating the operation of the discharge valve 70 in the injection unit 3 according to the first embodiment. When a flow of FIG. 8 starts, the valve body 72 of the discharge valve 70 is in the first state.

In Step S201, the determination unit 81 of the control unit 80 determines whether or not the direction switching valve 50 is in the second state. When the direction switching valve 50 is not in the second state (S201: No), in the process of the control unit 80, Step S201 is repeatedly performed. When the direction switching valve 50 is in the second state (S201: Yes), the process of the control unit 80 proceeds to Step S202.

In Step S202, the determination unit 81 of the control unit 80 determines whether or not a supply stop condition is satisfied. Here, when the supply stop condition is satisfied, the determination unit 81 determines that the cylinder (reservoir cylinder 10 and/or injection cylinder 20) of the injection unit 3 cannot receive the molten resin. The supply stop condition is a condition for stopping the supply of the molten resin to the reservoir cylinder 10 from the molten resin supply unit 30. In other words, the supply stop condition is a condition for discharging the molten resin supplied from the molten resin supply unit 30 from the discharge unit 60. For example, the determination unit 81 of the control unit 80 causes the encoder 17 to detect a position of the first plunger 12, and determines that the supply stop condition is satisfied when the first plunger 12 is retreated to a predetermined position (for example, a retreat limit). The reason is as follows. When the first plunger 12 is retreated to the predetermined position, remaining capacity that can be accumulated in the reservoir cylinder 10 decreases, thereby causing a possibility that the molten resin may overflow from the reservoir cylinder 10. In addition, when a cycle time exceeds a predetermined time, the determination unit 81 of the control unit 80 may determine that the supply stop condition is satisfied. The molten resin is supplied to the reservoir cylinder 10. With the lapse of time, the molten resin accumulated in the reservoir cylinder 10 increases. The reason is as follows. When the cycle time exceeds the predetermined time, the remaining capacity that can be accumulated in the reservoir cylinder 10 decreases, thereby causing a possibility that the molten resin may overflow from the reservoir cylinder 10. In addition, the determination unit 81 of the control unit 80 may determine whether or not the supply stop condition is satisfied, based on a detection value of the pressure detector 18. When the supply stop condition is not satisfied (S202: No), the process of the control unit 80 returns to Step S201. When the supply stop condition is satisfied (S202: Yes), the process of the control unit 80 proceeds to Step S203.

FIG. 9 is a view illustrating a state of the injection unit 3 according to the first embodiment in which the discharge valve 70 is in the second state. In Step S203, the processing unit 82 of the control unit 80 controls the valve body drive unit of the discharge valve 70 so that the valve body 72 of the discharge valve 70 is brought into the second state. The molten resin supplied from the molten resin supply unit 30 is discharged outward of the injection unit 3 from the discharge unit 60 via the molten resin supply unit 30 and the discharge valve 70.

In Step S204, the determination unit 81 of the control unit 80 determines whether or not the operation of the injection unit 3 starts the plasticizing process (refer to Step S101 in FIG. 3). When the plasticizing process does not start (S204: No), the process of the control unit 80 returns to Step S203. When the plasticizing process starts (S204: Yes), the process of the control unit 80 proceeds to Step S205.

In Step S205, the processing unit 82 of the control unit 80 controls the valve body drive unit of the discharge valve 70 so that the valve body 72 of the discharge valve 70 is brought into the first state. Then, the process of the control unit 80 returns to Step S201.

In this way, according to the injection unit 3 in the first embodiment, when it is determined that the injection unit 3 of the cylinder (reservoir cylinder 10 and/or injection cylinder 20) cannot receive the molten resin, the molten resin supplied from the molten resin supply unit 30 is discharged outward of the injection unit 3 from the discharge unit 60. In this manner, it is possible to prevent the molten resin from overflowing in the cylinder (reservoir cylinder 10 and/or injection cylinder 20), and it is possible to prevent damage to the injection unit 3.

### <Injection Unit 3A according to Second Embodiment>

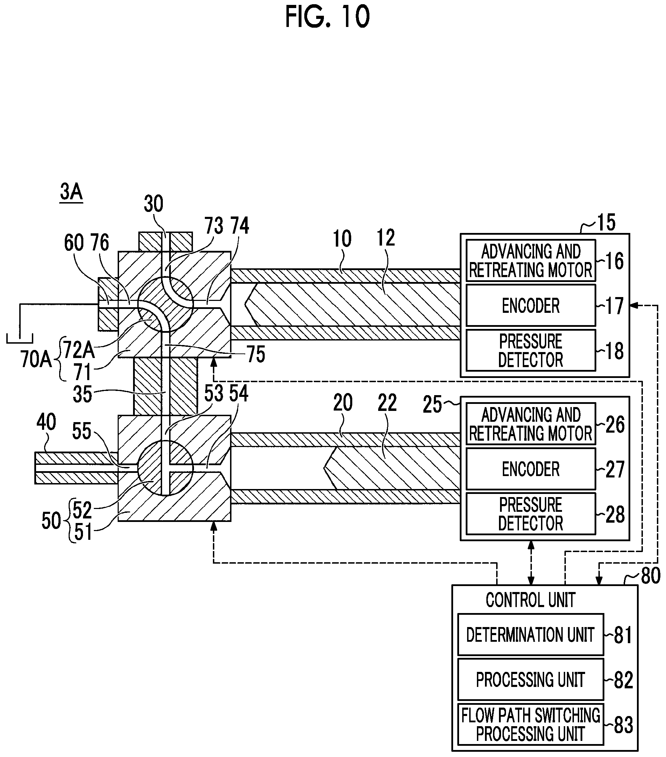

Next, an injection unit 3A of an injection molding machine according to a second embodiment will be described with reference to FIG. 10. FIG. 10 is a schematic sectional view of the injection unit 3A according to the second embodiment. FIG. 10 is a sectional view perpendicular to the rotation center line of the valve body 52.

The injection unit 3A according to the second embodiment illustrated in FIG. 10 is different from the injection unit 3 according to the first embodiment illustrated in FIG. 2 in that a supply/discharge valve 70A is provided instead of the discharge valve 70. Specifically, the connection of the flow path in the valve body 72A is different. Other configurations are the same as those of the injection unit 3 according to the first embodiment, and repeated description will be omitted.

The supply/discharge valve 70A is a valve for switching between the supply and the discharge of the molten resin. In an example illustrated in FIG. 10, the supply/discharge valve 70A is configured to serve as the direction switching valve. The supply/discharge valve 70A switches flow directions of the molding material among the molten resin supply unit 30, the reservoir cylinder 10, the connecting portion 35 (direction switching valve 50), and the discharge unit 60. The supply/discharge valve 70A has the valve casing 71, a valve body 72A, and a valve body drive unit (not illustrated).

The valve casing 71 has connection ports 73 to 76. The connection port 73 communicates with the inside of the molten resin supply unit 30. The connection port 74 communicates with the inside of the reservoir cylinder 10. The connection port 75 communicates with the inside of the connecting portion 35. The connection port 76 communicates with the inside of the discharge unit 60. In the connection ports 73 to 76, the connection port 73, the connection port 74, the connection port 75, and the connection port 76 are disposed at a 90° pitch in this order in a predetermined direction (clockwise in FIG. 10) around the rotation center line of the valve body 72. In addition, the connection ports 73 to 75 serve as supply paths for supplying the molten resin from the molten resin supply unit 30 to the cylinder (reservoir cylinder 10 and/or the injection cylinder 20). The connection port 76 serves as a discharge path for discharging the molten resin from the molten resin supply unit 30 to the discharge unit 60.

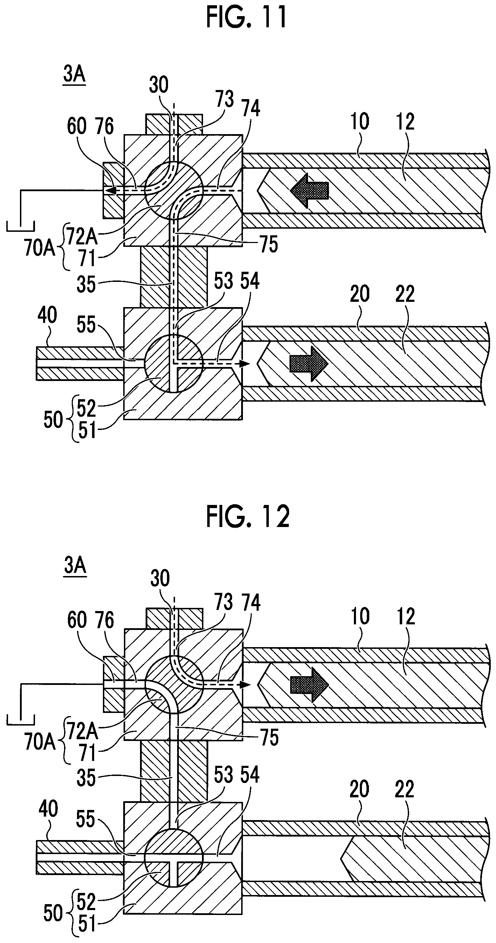

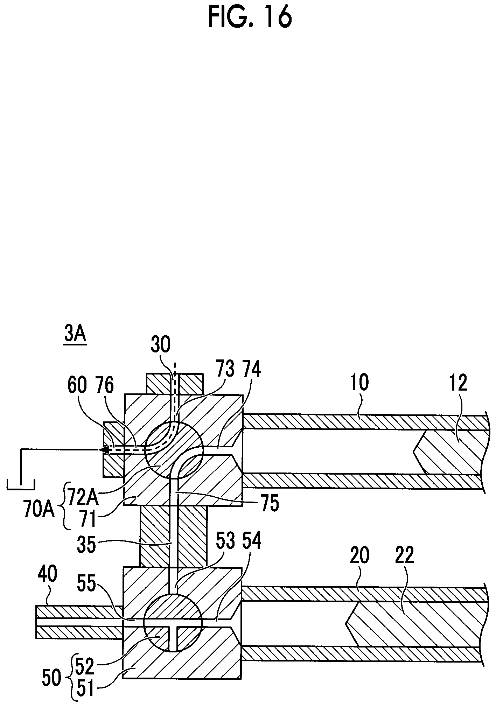

The valve body 72A is rotated inside the valve casing 71 to switch between the first state (refer to FIGS. 12 to 14 (to be described later)) and the second state (refer to FIGS. 11 and 16 (to be described later)). In the first state, the valve body 72A causes the connection port 73 and the connection port 74 to communicate with each other, and causes the connection port 75 and the connection port 76 to communicate with each other. On the other hand, in the second state, the valve body 72A causes the connection port 73 and the connection port 76 to communicate with each other, and causes the connection port 74 and the connection port 75 to communicate with each other. In this manner, in the first state, the molten resin can be supplied to the reservoir cylinder 10 from the molten resin supply unit 30. In the second state, the molten resin can be supplied to the injection cylinder 20 from the reservoir cylinder 10, and the molten resin can be discharged to the discharge unit 60 from the molten resin supply unit 30.

The valve body drive unit operates the valve body 72A. Specifically, the valve body drive unit switches between the first state and the second state by rotating the valve body 72A inside the valve casing 71.

### <Operation of Injection Unit 3A according to Second Embodiment>

Next, an operation of the injection unit 3A according to the second embodiment will be described with reference to FIGS. 11 to 14 while referring to FIG. 3. In FIGS. 11 to 14 (and FIG. 16 (to be described later)), a flow of the molten resin is indicated by a broken line arrow, and moving directions of the first plunger 12 and the second plunger 22 are indicated by shaded arrows. In addition, in the flowchart illustrated in FIG. 3, an example will be described in which the determination unit 81 determines that the molten resin is suppliable to the injection unit 3A.

FIG. 11 is a view illustrating a state of the injection unit 3A according to the second embodiment in the plasticizing process. In Step S101, the flow path switching processing unit 83 of the control unit 80 performs the plasticizing process. The flow path switching processing unit 83 of the control unit 80 controls a valve body drive unit of the direction switching valve 50 so that the valve body 52 of the direction switching valve 50 is brought into the first state. In addition, the flow path switching processing unit 83 of the control unit 80 controls the valve body drive unit of the supply/discharge valve 70A so that the valve body 72A of the supply/discharge valve 70A is brought into the second state. In addition, the flow path switching processing unit 83 of the control unit 80 drives the advancing and retreating motor 16 to advance the first plunger 12. The molten resin accumulated in front of the first plunger 12 inside the reservoir cylinder 10 is accumulated in front of the second plunger 22 inside the injection cylinder 20 via the supply/discharge valve 70A, the connecting portion 35, and the direction switching valve 50. On the other hand, the molten resin supplied from the molten resin supply unit 30 is discharged outward of the injection unit 3 from the discharge unit 60 via the molten resin supply unit 30 and the supply/discharge valve 70A.

The molten resin is accumulated in front of the second plunger 22 inside the injection cylinder 20. In this manner, the second plunger 22 inside the injection cylinder 20 is retreated. In addition, the flow path switching processing unit 83 of the control unit 80 detects a position of the second plunger 22, based on a detection value of the encoder 27. Here, in order to suppress sudden retreat of the second plunger 22, the flow path switching processing unit 83 of the control unit 80 may drive the advancing and retreating motor 26, based on a detection value of the pressure detector 28, and a set back pressure may be applied to the second plunger 22.

FIG. 12 is a view illustrating a state of the injection unit 3A according to the second embodiment after the plasticizing process is completed. When the second plunger 22 is retreated to a predetermined position and a predetermined amount of the molten resin is accumulated in front of the second plunger 22, the flow path switching processing unit 83 of the control unit 80 stops driving the advancing and retreating motor 16, and stops driving the advancing and retreating motor 26. In addition, the flow path switching processing unit 83 of the control unit 80 controls the valve body drive unit of the direction switching valve 50 so that the valve body 52 of the direction switching valve 50 is brought into the second state. In addition, the flow path switching processing unit 83 of the control unit 80 controls the valve body drive unit of the supply/discharge valve 70A so that the valve body 72A of the supply/discharge valve 70A is brought into the first state. The molten resin supplied from the molten resin supply unit 30 is accumulated in front of the first plunger 12 inside the reservoir cylinder 10 via the molten resin supply unit 30 and the supply/discharge valve 70A. The molten resin is accumulated in front of the first plunger 12 inside the reservoir cylinder 10. In this manner, the first plunger 12 inside the reservoir cylinder 10 is retreated. In addition, the flow path switching processing unit 83 of the control unit 80 detects a position of the first plunger 12, based on a detection value of the encoder 17. Here, in order to suppress sudden retreat of the first plunger 12, the flow path switching processing unit 83 of the control unit 80 may drive the advancing and retreating motor 16, based on a detection value of the pressure detector 18, and a set back pressure may be applied to the first plunger 12. A process in which the valve body 52 of the direction switching valve 50 is brought into the second state and the molten resin supplied from the molten resin supply unit 30 is accumulated in front of the first plunger 12 inside the reservoir cylinder 10 will be referred to as a reservoir plunger plasticizing process.

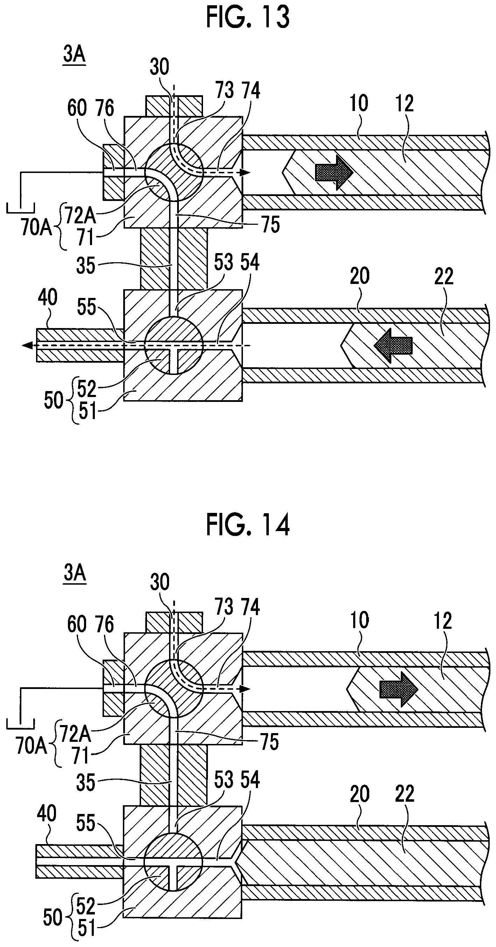

FIG. 13 is a view illustrating a state of the injection unit 3A according to the second embodiment in the filling process. In Step S102, the flow path switching processing unit 83 of the control unit 80 performs the filling process. The flow path switching processing unit 83 of the control unit 80 drives the advancing and retreating motor 26 to advance the second plunger 22 to a predetermined position. In addition, the flow path switching processing unit 83 of the control unit 80 detects a position of the second plunger 22, based on a detection value of the encoder 27. The cavity space inside the mold unit is filled with the molten resin accumulated in front of the second plunger 22 inside the injection cylinder 20 via the direction switching valve 50 and the nozzle 40. In addition, in the filling process, the molten resin supplied from the molten resin supply unit 30 is accumulated in front of the first plunger 12 inside the reservoir cylinder 10 via the molten resin supply unit 30 and the supply/discharge valve 70A (reservoir plunger plasticizing process).

FIG. 14 is a view illustrating a state of the injection unit 3A according to the second embodiment in the holding pressure process. In Step S103, the flow path switching processing unit 83 of the control unit 80 performs the holding pressure process. In addition, the flow path switching processing unit 83 of the control unit 80 controls the advancing and retreating motor 26, based on a detection value of the pressure detector 28, so that the second plunger 22 is pushed forward, a pressure (holding pressure) of the molten resin is held at a setting pressure in the front end portion of the second plunger 22, and the molten resin remaining inside the injection cylinder 20 is pushed toward the mold unit. In addition, in the holding pressure process, the molten resin supplied from the molten resin supply unit 30 is accumulated in front of the first plunger 12 inside the reservoir cylinder 10 via the molten resin supply unit 30 and the supply/discharge valve 70A (reservoir plunger plasticizing process). In addition, the flow path switching processing unit 83 of the control unit 80 detects a position of the first plunger 12, based on a detection value of the encoder 17.

After the holding pressure process is completed and before the molding material is supplied from the reservoir cylinder 10 to the injection cylinder 20 in the subsequent plasticizing process, the flow path switching processing unit 83 of the control unit 80 rotates the valve body 52 of the direction switching valve 50, and returns a state of the valve body 52 from the second state illustrated in FIG. 14 to the first state illustrated in FIG. 11. In addition, the valve body 72A of the supply/discharge valve 70A is rotated to return the state of the valve body 72A from the first state illustrated in FIG. 14 to the second state illustrated in FIG. 11.

The flow path switching processing unit 83 of the control unit 80 repeatedly performs the plasticizing process, the filling process, and the holding pressure process so that the injection molding machine 1 repeatedly manufactures the molding products.

In other words, the control unit 80 of the injection unit 3A according to the second embodiment repeatedly performs the reservoir plunger plasticizing process of supplying the molten resin from the molten resin supply unit 30 to the reservoir cylinder 10 and accumulating the molten resin in the reservoir cylinder 10, the plasticizing process of supplying the molten resin from the reservoir cylinder 10 to the injection cylinder 20 and accumulating the molten resin in the injection cylinder 20, the filling process of filling the cavity space inside the mold unit with the molten resin from the injection cylinder 20, and the holding pressure process of holding the pressure of the molten resin at the setting pressure. In addition, during the injection process (filling process and holding pressure process), the reservoir plunger plasticizing process of the subsequent molding cycle is performed at the same time.

As described above, according to the injection unit 3A in the second embodiment, the injection unit 3A is used for the injection molding machine system S in which the molten resin is continuously supplied to the molten resin supply unit 30 from the molten resin supply device 6. In the reservoir plunger plasticizing process, the molten resin can be accumulated in the reservoir cylinder 10. Accordingly, the overflow of the molten resin can be prevented. In addition, in the plasticizing process of supplying the molten resin from the reservoir cylinder 10 to the injection cylinder 20, the molten resin is discharged outward of the injection unit 3A from the discharge unit 60. In this manner, it is possible to prevent the molten resin from overflowing in the cylinder (reservoir cylinder 10 and/or injection cylinder 20), and it is possible to prevent damage to the injection unit 3.

### <Operation of Supply/Discharge Valve 70A>

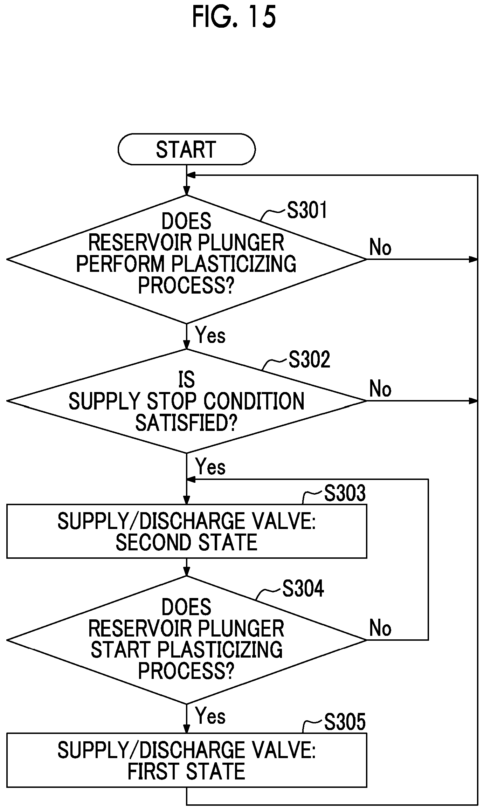

Next, an operation of the supply/discharge valve 70A of the injection unit 3A according to the second embodiment will be described with reference to FIG. 15 while referring to FIG. 8. FIG. 15 is a flowchart illustrating the operation of the supply/discharge valve 70A in the injection unit 3A according to the second embodiment.

In Step S301, the determination unit 81 of the control unit 80 determines whether or not a process of the injection unit 3A is the reservoir plunger plasticizing process. That is, it is determined whether or not the supply/discharge valve 70A is in the first state (refer to FIGS. 12 to 14), and the molten resin is supplied from the molten resin supply unit 30 to the reservoir cylinder 10. When the process is not the reservoir plunger plasticizing process (S301: No), in the process of the control unit 80, Step S301 is repeatedly performed. When the process is the reservoir plunger plasticizing process (S301: Yes), the process of the control unit 80 proceeds to Step S302.

In Step S302, the determination unit 81 of the control unit 80 determines whether or not the supply stop condition is satisfied. Here, when the supply stop condition is satisfied, the determination unit 81 determines that the cylinder (reservoir cylinder 10 and/or injection cylinder 20) of the injection unit 3A cannot receive the molten resin. The supply stop condition is a condition for stopping the supply of the molten resin to the reservoir cylinder 10 from the molten resin supply unit 30. In other words, the supply stop condition is a condition for discharging the molten resin supplied from the molten resin supply unit 30 from the discharge unit 60. For example, the determination unit 81 of the control unit 80 causes the encoder 17 to detect a position of the first plunger 12, and determines that the supply stop condition is satisfied when the first plunger 12 is retreated to a predetermined position (for example, a retreat limit). In addition, when a cycle time exceeds a predetermined time, the determination unit 81 of the control unit 80 may determine that the supply stop condition is satisfied. In addition, the determination unit 81 of the control unit 80 may determine whether or not the supply stop condition is satisfied, based on a detection value of the pressure detector 18. When the supply stop condition is not satisfied (S302: No), the process of the control unit 80 returns to Step S301. When the supply stop condition is satisfied (S302: Yes), the process of the control unit 80 proceeds to Step S303.

FIG. 16 is a view illustrating a state of the injection unit 3A according to the second embodiment in which the supply/discharge valve 70A is in the second state. In Step S303, the processing unit 82 of the control unit 80 controls the valve body drive unit of the supply/discharge valve 70A so that the valve body 72A of the supply/discharge valve 70A is brought into the second state. The molten resin supplied from the molten resin supply unit 30 is discharged outward of the injection unit 3A from the discharge unit 60 via the molten resin supply unit 30 and the supply/discharge valve 70A.

In Step S304, the determination unit 81 of the control unit 80 determines whether or not the operation of the injection unit 3A starts the reservoir plunger plasticizing process. In other words, it is determined whether or not the plasticizing process S101 of supplying the molten resin to the injection cylinder 20 from the reservoir cylinder 10 is completed and the molten resin can be supplied from the molten resin supply unit 30 to the reservoir cylinder 10. When the reservoir plunger plasticizing process does not start (S304: No), the process of the control unit 80 returns to Step S303. When the reservoir plunger plasticizing process starts (S304: Yes), the process of the control unit 80 proceeds to Step S305.

In Step S305, the processing unit 82 of the control unit 80 controls the valve body drive unit of the supply/discharge valve 70A so that the valve body 72A of the supply/discharge valve 70A is brought into the first state (refer to FIG. 12). Then, the process of the control unit 80 returns to Step S301.

In this way, according to the injection unit 3A in the second embodiment, when it is determined that the cylinder of the injection unit 3A (reservoir cylinder 10 and/or injection cylinder 20) cannot receive the molten resin, the molten resin supplied from the molten resin supply unit 30 is discharged outward of the injection unit 3A from the discharge unit 60. In this manner, it is possible to prevent the molten resin from overflowing in the cylinder (reservoir cylinder 10 and/or injection cylinder 20), and it is possible to prevent damage to the injection unit 3.

Hitherto, the embodiments of the injection molding machine system S, the injection molding machine 1, and the injection units 3 and 3A have been described. However, the present invention is not limited to the above-described embodiments. Various modifications and improvements can be made within the scope of the present invention described in the appended claims.

An example has been described in which the direction switching valve 50 is a switching valve that switches the flow directions by rotating the valve body 52 inside the valve casing 51. However, the present invention is not limited thereto. The direction switching valve 50 may be a switching valve that switches the flow directions by sliding the valve body inside the valve casing, or may be a switching valve that switches the flow directions by adopting another configuration. In addition, an example has been described in which the discharge valve 70 is a switching valve that switches the flow directions by rotating the valve body 72 inside the valve casing 71. However, the present invention is not limited thereto. The discharge valve 70 may be a switching valve that switches the flow directions by sliding the valve body inside the valve casing, or may be a switching valve that switches the flow directions by adopting another configuration.

An example has been described in which the discharge valve 70 is a direction switching valve. However, the present invention is not limited thereto. For example, the discharge valve 70 may be configured to serve as an on-off valve provided in the discharge unit 60. In this configuration, instead of a configuration in which the control unit 80 causes the direction switching valve serving as the discharge valve 70 to switch between the first state and the second state, the control unit 80 causes the on-off valve serving as the discharge valve 70 to switch between a valve closed state (first state) and a valve open state (second state).

In addition, the discharge valve 70 may be configured to serve as a relief valve that is opened when the pressure of the molten resin inside the reservoir cylinder 10 reaches a predetermined pressure or higher.

In addition, when the determination unit 81 of the control unit 80 (4) determines that the supply stop condition is satisfied (S202: Yes / S302: Yes), in other words, that the cylinder(reservoir cylinder 10 and/or injection cylinder 20) of the injection units 3 and 3A cannot receive the molten resin, instead of a configuration in which the direction switching valve serving as the discharge valve 70 is caused to switch between the first state and the second state, a configuration may be adopted to close the control valve 8 (refer to FIG. 1) of the molten resin supply path 7. In this manner, the supply of the molten resin to the injection unit 3 can be blocked.

In addition, when the determination unit 81 of the control unit 80 (4) determines that the supply stop condition is satisfied (S202: Yes / S302: Yes), in other words, that the cylinder (reservoir cylinder 10 and/or injection cylinder 20) of the injection units 3 and 3A cannot receive the molten resin, a configuration may be adopted in which a signal indicating the determination is transmitted to a host management device (not illustrated) that controls the whole injection molding machine system S. The host management device receiving the signal controls (closes) the control valve 8 that controls the whole injection molding machine system S, for example, that controls the molten resin supply device 6. In this manner, the supply of the molten resin to the injection unit 3 can be blocked.

An example has been described in which only the molten resin is supplied to the injection units 3 and 3A. However, the present invention is not limited thereto. For example, a configuration may be adopted so that the molten resin and pellets are supplied to the first cylinder. In this case, a screw may be provided in the first cylinder instead of the first plunger. In addition, the first plunger drive unit 15 may include a screw rotating motor for rotating the screw, and a screw advancing and retreating motor for turning the screw inside the first cylinder.

An example has been described in which the injection units 3 and 3A have two cylinders (reservoir cylinder 10 and injection cylinder 20). However, the present invention is not limited thereto. For example, the injection units 3 and 3A may be configured to include one cylinder, or may be configured to include three or more cylinders.

### Brief Description of the Reference Symbols

- S:: injection molding machine system
- 1:: injection molding machine
- 3, 3A:: injection unit
- 4, 80:: control unit (control unit)
- 6:: molten resin supply device
- 7:: molten resin supply path
- 8:: control valve
- 10:: reservoir cylinder (first cylinder)
- 12:: first plunger (first movable unit)
- 15:: first plunger drive unit (first drive unit)
- 16:: advancing and retreating motor
- 17:: encoder
- 18:: pressure detector
- 20:: injection cylinder (second cylinder)
- 22:: second plunger (second movable unit)
- 25:: second plunger drive unit (second drive unit)
- 26:: advancing and retreating motor
- 27:: encoder
- 28:: pressure detector
- 30:: molten resin supply unit (supply unit)
- 35:: connecting portion
- 40:: nozzle
- 50:: direction switching valve (switching unit)
- 51:: valve casing
- 52:: valve body
- 60:: discharge unit
- 70:: discharge valve (discharge switching unit)
- 70A:: supply/discharge valve (supply/discharge switching unit)
- 71:: valve casing
- 72,72A:: valve body
- 73:: connection port (supply path)
- 74:: connection port (supply path)
- 75:: connection port (supply path)
- 76:: connection port (discharge path)

## Claims

1. An injection molding machine (1) comprising:
an injection unit (3, 3A) which includes a reservoir cylinder (10) and an injection cylinder (20) and to which a molten resin is supplied;
a supply unit (30) that supplies the molten resin to the reservoir cylinder (10) and the injection cylinder (20) ;
a discharge unit (60) that discharges the molten resin supplied to the injection unit (3, 3A);
a nozzle (40) that injects the molten resin supplied to the injection cylinder (20) into a mold unit;
a control unit (4, 80) that controls the injection unit (3, 3A);
a switching unit (50) that switches flow directions of the molten resin among a supply/discharge switching unit (70, 70A), the injection cylinder (20), and the nozzle (40); and
the supply/discharge switching unit (70, 70A) that switches flow directions of the molten resin among the supply unit (30), the reservoir cylinder (10), the switching unit (50), and the discharge unit (60),
wherein
the control unit (4, 80) includes
a determination unit (81) that determines whether or not the molten resin is capable of being received in the injection cylinder (20), and
a processing unit (82) that controls the supply/discharge switching unit (70, 70A) such that the flow direction of the molten resin is switched, based on a determination result of the determination unit (81).

2. The injection molding machine (1) according to claim 1,
wherein when the determination unit (81) determines that the molten resin is not capable of being received in the injection cylinder (20) of the injection unit (3, 3A), the processing unit (82) discharges the molten resin supplied from the supply unit (30) from the discharge unit (60).

3. The injection molding machine (1) according to claim 2,
wherein the injection unit (3, 3A) includes a discharge path (76) that discharges the molten resin from the supply unit (30) to the discharge unit (60),
the supply/discharge switching unit (70, 70A) switches between communication and blockage of the discharge path (76),
when the determination unit (81) determines that the molten resin is capable of being received in the injection cylinder (20) of the injection unit (3, 3A), the processing unit (82) controls the supply/discharge switching unit (70) so that the discharge path (76) is blocked, and
when the determination unit (81) determines that the molten resin is not capable of being received in the injection cylinder (20) of the injection unit (3, 3A), the processing unit (82) controls the supply/discharge switching unit (70) so that the discharge path (76) is communicative.

4. The injection molding machine (1) according to claim 2,
wherein the injection unit (3, 3A) includes
a supply path (73, 74, 75) that supplies the molten resin from the supply unit (30) to the injection cylinder (20), and
a discharge path (76) that discharges the molten resin from the supply unit (30) to the discharge unit (60),
the supply/discharge switching unit (70, 70A) switches between communication of the supply path (73, 74, 75) and communication of the discharge path (76),
when the determination unit (81) determines that the molten resin is capable of being received in the injection cylinder (20) of the injection unit (3, 3A), the processing unit (82) controls the supply/discharge switching unit (70, 70A) so that the supply path (73, 74, 75) is communicative and the discharge path (76) is blocked, and
when the determination unit (81) determines that the molten resin is not capable of being received in the injection cylinder (20) of the injection unit (3, 3A), the processing unit (82) controls the supply/discharge switching unit (70, 70A) so that the discharge path (76) is communicative and the supply path (73, 74, 75) is blocked.

5. The injection molding machine (1) according to any one of claims 2 to **4,**
wherein the injection unit (3, 3A) includes
a first movable unit (12) provided inside the reservoir cylinder (10) to be freely advanced and retreated,
a first drive unit (15) that advances and retreats the first movable unit (12),
the injection cylinder (20) to which the molten resin is supplied from the reservoir cylinder (10),
a second movable unit (22) provided inside the injection cylinder (20) to be freely advanced and retreated, and
a second drive unit (25) that advances and retreats the second movable unit (22),
the switching unit (50) switches between a first state for connecting the reservoir cylinder (10) and the injection cylinder (20) to each other, and a second state for connecting the injection cylinder (20) and the nozzle (40) to each other, and
the control unit (4, 80) includes a flow path switching processing unit (83) that controls the first drive unit (15), the second drive unit (25), and the switching unit (50).

## Patentansprüche

1. Spritzgießmaschine (1), umfassend:
eine Einspritzeinheit (3, 3A), die einen Vorratszylinder (10) und einen Einspritzzylinder (20) umfasst und der ein geschmolzenes Harz zugeführt wird;
eine Zufuhreinheit (30), die das geschmolzene Harz dem Vorratszylinder (10) und dem Einspritzzylinder (20) zuführt;
eine Abgabeeinheit (60), die das geschmolzene Harz, das der Einspritzeinheit (3, 3A) zugeführt wird, abgibt;
eine Düse (40), die das geschmolzene Harz, das dem Einspritzzylinder (20) zugeführt wird, in eine Formeinheit einspritzt;
eine Steuereinheit (4, 80), die die Einspritzeinheit (3, 3A) steuert;
eine Umschalteinheit (50), die die Strömungsrichtungen des geschmolzenen Harzes zwischen einer Zufuhr-/Abgabe-Umschalteinheit (70, 70A), dem Einspritzzylinder (20) und der Düse (40) umschaltet; und
die Zufuhr/Abgabe-Umschalteinheit (70, 70A), die die Strömungsrichtungen des geschmolzenen Harzes zwischen der Zufuhreinheit (30), dem Vorratszylinder (10), der Umschalteinheit (50) und der Abgabeeinheit (60) umschaltet,
wobei
die Steuereinheit (4, 80) umfasst
eine Bestimmungseinheit (81), die bestimmt, ob das geschmolzene Harz in der Lage ist, in den Einspritzzylinder (20) aufgenommen zu werden oder nicht, und
eine Verarbeitungseinheit (82), die die Zufuhr/Abgabe-Umschalteinheit (70, 70A) so steuert, dass die Strömungsrichtung des geschmolzenen Harzes auf der Grundlage eines Bestimmungsergebnisses der Bestimmungseinheit (81) umgeschaltet wird.

2. Spritzgießmaschine (1) nach Anspruch 1,
wobei, wenn die Bestimmungseinheit (81) bestimmt, dass das geschmolzene Harz nicht in der Lage ist, in den Einspritzzylinder (20) der Einspritzeinheit (3, 3A) aufgenommen zu werden, die Verarbeitungseinheit (82) das geschmolzene Harz, das von der Zufuhreinheit (30) zugeführt wird, aus der Abgabeeinheit (60) abgibt.

3. Spritzgießmaschine (1) nach Anspruch 2,
wobei die Einspritzeinheit (3, 3A) einen Abgabepfad (76) umfasst, der das geschmolzene Harz von der Zufuhreinheit (30) zu der Abgabeeinheit (60) abgibt,
die Zufuhr-/Abgabe -Umschalteinheit (70, 70A) zwischen Kommunikation und Blockierung des Abgabepfads (76) umschaltet,
wenn die Bestimmungseinheit (81) bestimmt, dass das geschmolzene Harz in der Lage ist, in dem Einspritzzylinder (20) der Einspritzeinheit (3, 3A) aufgenommen zu werden, steuert die Verarbeitungseinheit (82) die Zufuhr-/Abgabe-Umschalteinheit (70), so, dass der Abgabepfad (76) blockiert wird, und
wenn die Bestimmungseinheit (81) bestimmt, dass das geschmolzene Harz nicht in der Lage ist, in den Einspritzzylinder (20) der Einspritzeinheit (3, 3A) aufgenommen zu werden, steuert die Verarbeitungseinheit (82) die Zufuhr-/Abgabe -Umschalteinheit (70) so, dass der Abgabepfad (76) kommunikativ ist.

4. Spritzgießmaschine (1) nach Anspruch 2,
wobei die Einspritzeinheit (3, 3A) umfasst
einen Zufuhrpfad (73, 74, 75), der das geschmolzene Harz von der Zufuhreinheit (30) dem Einspritzzylinder (20) zuführt, und
einen Abgabepfad (76), der das geschmolzene Harz von der Zufuhreinheit (30) zu der Abgabeeinheit (60) abgibt,
die Zufuhr-/Abgabe -Umschalteinheit (70, 70A) zwischen Kommunikation des Zufuhrpfades (73, 74, 75) und Kommunikation des Abgabepfades (76) umschaltet,
wenn die Bestimmungseinheit (81) bestimmt, dass das geschmolzene Harz in der Lage ist, in den Einspritzzylinder (20) der Einspritzeinheit (3, 3A) aufgenommen zu werden, steuert die Verarbeitungseinheit (82) die Zufuhr-/Abgabe-Umschalteinheit (70, 70A) so, dass der Zufuhrpfad (73, 74, 75) kommunikativ ist und der Abgabepfad (76) blockiert ist, und
wenn die Bestimmungseinheit (81) bestimmt, dass das geschmolzene Harz nicht in der Lage ist, in den Einspritzzylinder (20) der Einspritzeinheit (3, 3A) aufgenommen zu werden, steuert die Verarbeitungseinheit (82) die Zufuhr-/Abgabe -Umschalteinheit (70, 70A) so, dass der Abgabepfad (76) kommunikativ ist und der Zufuhrpfad (73, 74, 75) blockiert ist.

5. Spritzgießmaschine (1) nach einem der Ansprüche 2 bis 4,
wobei die Einspritzeinheit (3, 3A) umfasst
eine erste bewegliche Einheit (12), die in dem Inneren des Vorratszylinders (10) vorgesehen ist, um frei vor- und rückwärts bewegt zu werden,
eine erste Antriebseinheit (15), die die erste bewegliche Einheit (12) vor- und zurückbewegt,
den Einspritzzylinder (20), dem das geschmolzene Harz aus dem Vorratszylinder (10) zugeführt wird,
eine zweite bewegliche Einheit (22), die in dem Inneren des Einspritzzylinders (20) vorgesehen ist, um frei vor- und zurückbewegt zu werden, und
eine zweite Antriebseinheit (25), die die zweite bewegliche Einheit (22) vor- und zurückbewegt,
die Umschalteinheit (50) zwischen einem ersten Zustand zum Verbinden des Vorratszylinders (10) und des Einspritzzylinders (20) miteinander und einem zweiten Zustand zum Verbinden des Einspritzzylinders (20) und der Düse (40) miteinander umschaltet, und
die Steuereinheit (4, 80) eine Strömungspfad-Umschaltverarbeitungseinheit (83) umfasst, die die erste Antriebseinheit (15), die zweite Antriebseinheit (25) und die Umschalteinheit (50) steuert.

## Revendications

1. Une machine de moulage par injection (1) comprenant :
une unité d'injection (3, 3A) qui inclut un cylindre de réservoir (10) et un cylindre d'injection (20) et à laquelle une résine fondue est fournie ;
une unité d'alimentation (30) qui fournit la résine fondue au cylindre de réservoir (10) et au cylindre d'injection (20) ;
une unité de décharge (60) qui décharge la résine fondue fournie à l'unité d'injection (3, 3A) ;
une buse (40) qui injecte la résine fondue fournie au cylindre d'injection (20) dans une unité de moule ;
une unité de commande (4, 80) qui commande l'unité d'injection (3, 3A) ;
une unité de commutation (50) qui commute les directions d'écoulement de la résine fondue entre une unité de commutation d'alimentation/décharge (70, 70A), le cylindre d'injection (20) et la buse (40) ; et
l'unité de commutation d'alimentation/décharge (70, 70A) qui commute les directions d'écoulement de la résine fondue entre l'unité d'alimentation (30), le cylindre de réservoir (10), l'unité de commutation (50) et l'unité de décharge (60),
dans laquelle l'unité de commande (4, 80) inclut
une unité de détermination (81) qui détermine si la résine fondue est apte ou non à être reçue dans le cylindre d'injection (20), et
une unité de traitement (82) qui commande l'unité de commutation d'alimentation/décharge (70, 70A) de telle sorte que la direction d'écoulement de la résine fondue est commutée, sur la base d'un résultat de détermination de l'unité de détermination (81).

2. La machine de moulage par injection (1) selon la revendication 1,
dans laquelle lorsque l'unité de détermination (81) détermine que la résine fondue n'est pas apte à être reçue dans le cylindre d'injection (20) de l'unité d'injection (3, 3A), l'unité de traitement (82) décharge la résine fondue fournie par l'unité d'alimentation (30) depuis l'unité de décharge (60).

3. La machine de moulage par injection (1) selon la revendication 2,
dans laquelle l'unité d'injection (3, 3A) inclut une trajectoire de décharge (76) qui décharge la résine fondue de l'unité d'alimentation (30) vers l'unité de décharge (60),
l'unité de commutation d'alimentation/décharge (70, 70A) commute entre la communication et le blocage de la trajectoire de décharge (76),
lorsque l'unité de détermination (81) détermine que la résine fondue est apte à être reçue dans le cylindre d'injection (20) de l'unité d'injection (3, 3A), l'unité de traitement (82) commande l'unité de commutation d'alimentation/décharge (70) de telle sorte que la trajectoire de décharge (76) est bloquée, et
lorsque l'unité de détermination (81) détermine que la résine fondue n'est pas apte à être reçue dans le cylindre d'injection (20) de l'unité d'injection (3, 3A), l'unité de traitement (82) commande l'unité de commutation d'alimentation/décharge (70) de telle sorte que la trajectoire de décharge (76) est communicative.

4. La machine de moulage par injection (1) selon la revendication 2,
dans laquelle l'unité d'injection (3, 3A) inclut
une trajectoire d'alimentation (73, 74, 75) qui fournit la résine fondue de l'unité d'alimentation (30) au cylindre d'injection (20), et
une trajectoire de décharge (76) qui décharge la résine fondue de l'unité d'alimentation (30) vers l'unité de décharge (60),
l'unité de commutation d'alimentation/décharge (70, 70A) commute entre communication de la trajectoire d'alimentation (73, 74, 75) et communication de la trajectoire de décharge (76),
lorsque l'unité de détermination (81) détermine que la résine fondue est apte à être reçue dans le cylindre d'injection (20) de l'unité d'injection (3, 3A), l'unité de traitement (82) commande l'unité d'alimentation/décharge (70, 70A) de telle sorte que la trajectoire d'alimentation (73, 74, 75) est communicative et la trajectoire de décharge (76) est bloquée, et
lorsque l'unité de détermination (81) détermine que la résine fondue n'est pas apte à être reçue dans le cylindre d'injection (20) de l'unité d'injection (3, 3A), l'unité de traitement (82) commande l'unité de commutation d'alimentation/décharge (70, 70A) de telle sorte que la trajectoire de décharge (76) est communicative et que la trajectoire d'alimentation (73, 74, 75) est bloquée.

5. La machine de moulage par injection (1) selon l'une quelconque des revendications 2 à 4,
dans laquelle l'unité d'injection (3, 3A) inclut
une première unité mobile (12) disposée à l'intérieur du cylindre de réservoir (10) de sorte à pouvoir avancer et reculer librement,
une première unité d'entraînement (15) qui fait avancer et reculer la première unité mobile (12),
le cylindre d'injection (20) auquel de la résine fondue est fournie à partir du cylindre de réservoir (10),
une deuxième unité mobile (22) disposée à l'intérieur du cylindre d'injection (20) de sorte à pouvoir avancer et reculer librement, et
une deuxième unité d'entraînement (25) qui fait avancer et reculer la deuxième unité mobile (22),
l'unité de commutation (50) commute entre un premier état pour connecter le cylindre de réservoir (10) et le cylindre d'injection (20) l'un à l'autre, et un deuxième état pour connecter le cylindre d'injection (20) et la buse (40) l'un à l'autre, et
l'unité de commande (4, 80) inclut une unité de traitement de commutation de trajectoire d'écoulement (83) qui commande la première unité d'entraînement (15), la deuxième unité d'entraînement (25) et l'unité de commutation (50).
